# EUROPÄISCHE PATENTSCHRIFT

(11) **EP 2 838 861 B1**
(45) Veröffentlichungstag und Bekanntmachung des Hinweises auf die Patenterteilung: **05.12.2018**
(21) Anmeldenummer: 13719061.7
(22) Anmeldetag: 19.04.2013
(51) Int. Cl.: C03C 17/42, F24C 15/02, F24C 15/10

(54) **VERBUNDMATERIAL MIT DEKORATIVER BESCHICHTUNG SOWIE VERFAHREN ZU DESSEN HERSTELLUNG**
COMPOSITE MATERIAL WITH DECORATIVE COATING AND PROCESS FOR PRODUCTION THEREOF
MATÉRIAU COMPOSITE À COUCHE DE REVÊTEMENT DÉCORATIVE ET PROCÉDÉ DE FABRICATION DUDIT MATÉRIAU

(30) Priorität: 20.04.2012 DE 102012103507; 15.10.2012 DE 102012109808
(43) Veröffentlichungstag der Anmeldung: 25.02.2015
(73) Patentinhaber: Schott AG, 55122 Mainz (DE)
(72) Erfinder: BOCKMEYER, Matthias, 55116 Mainz (DE); ANTON, Andrea, 55595 Hüffelsheim (DE); KLIPPE, Lutz, 65185 Wiesbaden (DE); KOTTENSTEDTE, Claudia, 55126 Mainz (DE)
(74) Vertreter: Blumbach · Zinngrebe Patent- und Rechtsanwälte
(86) Internationale Anmeldenummer: PCT/EP2013/058218
(87) Internationale Veröffentlichungsnummer: WO 2013/156617

(56) Entgegenhaltungen:
- EP-A1- 2 141 133
- EP-A1- 2 141 134
- WO-A1-2006/111359
- WO-A1-2012/010302

## Beschreibung

### Gebiet der Erfindung

Die Erfindung betrifft ein Verfahren zur Herstellung eines Verbundmaterials mit dekorativer Beschichtung sowie ein entsprechendes dekoratives Verbundmaterial. Insbesondere bezieht sich die Erfindung auf ein Glaskeramiksubstrat, wie es beispielsweise für Kochflächen verwendet wird, mit einer dekorativen Unterseitenbeschichtung.

### Hintergrund der Erfindung

Mit einer dekorativen Beschichtung versehene Glas- oder Glaskeramiksubstrate sind bekannt. Insbesondere werden zumindest teiltransparente Glaskeramiksubstrate, wie sie für Kochflächen verwendet werden, mit einer Unterseitenbeschichtung versehen.

Die dekorative Beschichtung kann aus funktionellen Gründen aufgebracht sein, beispielsweise zur Markierung von Kochfeldern. Weiter kann eine dekorative Beschichtung auch nur dazu dienen, einen besonderen optischen Eindruck zu erzeugen, beispielsweise um ein Kochfeld in einer bestimmten Farbe bereitzustellen.

Zum Aufbringen von dekorativen Beschichtungen sind aus der Praxis eine Vielzahl von Möglichkeiten bekannt.

Beispielsweise gibt es mittels eines Sputter-Verfahrens aufgebrachte dekorative Beschichtungen. Derartige SputterVerfahren sind aufwendig. Weiter ist die Auswahl hinsichtlich der optischen Anmutung begrenzt. Im Falle einer Teilbeschichtung, beispielsweise zur Markierung von Kochflächen, müssen aufwendige Maskierungsschritte vorgenommen werden und gesputterte Schichten haben häufig eine unerwünscht hohe Leitfähigkeit, so dass diese oft nicht hinter kapazitiven Schaltern angeordnet werden können.

Weiter sind Silikonbeschichtungen bekannt. Diese haben den Vorteil, dass sie sich leicht über eine Silikonfarbe, beispielsweise mittels Siebdruck, aufbringen lassen, haben aber meist eine nicht optimale mechanische Beständigkeit und können sich bei hoher Temperaturbelastung verfärben.

Weiter bekannt sind Glasfluss-basierte Schichten, sogenannte Emailleschichten. Derartige pigmentierte Glasfluss-basierte Schichten haben den Nachteil, dass sie das Glaskeramiksubstrat unter Zugspannung setzen und so dessen Festigkeit verringern. Dieser Nachteil kann durch das Aufbringen poröser Schichten reduziert werden, was allerdings mit einer matten Anmutung des so hergestellten Verbundmaterials einhergeht.

Weiter bekannt sind pigmentierte Methylgruppenfunktionalsierte Sol-Gel-Schichten, welche allerdings zu Rissbildungen neigen, die sich als lokale Aufhellungen bemerkbar machen. Die Gefahr von Rissbildungen kann wiederum durch das Aufbringen von porösen Sol-Gel-Schichten reduziert werden, was wiederum mit einem matten Farbeindruck einhergeht. Insbesondere lassen sich keine tief schwarzen glänzenden Schichten bereitstellen.

Schließlich ist noch das Aufbringen von Lüsterfarben bekannt. Auch bei Lüsterfarben ist die Farbwahl eingeschränkt und für die Herstellung von tief schwarzen Farben muss auf teure Edelmetall-basierende Farben zurückgegriffen werden.

Das Dokument WO 2012/010302 A1 zeigt eine Dekorschicht aus einem Sol-Gel-Material, auf welche eine Versiegelungsschicht auf Silikon-Basis mit anorganischen Feststoffpartikeln aufgebracht ist.

### Aufgabe der Erfindung

Der Erfindung liegt demgegenüber die Aufgabe zugrunde, ein einfaches Verfahren zum Aufbringen einer Hochtemperatur-beständigen dekorativen Schicht mit guter optischer Anmutung bereitzustellen.

### Zusammenfassung der Erfindung

Die Aufgabe der Erfindung wird bereits durch ein Verfahren zum Herstellen eines Verbundmaterials mit dekorativer Beschichtung sowie durch ein Verbundmaterial mit dekorativer Beschichtung nach einem der unabhängigen Ansprüche gelöst.

Bevorzugte Ausführungsformen und Weiterbildungen der Erfindung sind Gegenstand der Unteransprüche.

Die Erfindung betrifft ein Verfahren zum Herstellen eines Verbundmaterials mit dekorativer Beschichtung, wobei unter einer dekorativen Beschichtung auch eine Beschichtung verstanden wird, welche zumindest teilweise aus funktionellen Gründen aufgebracht ist, wie beispielsweise eine Markierung von Kochflächen, eine aufgebrachte Beschriftung etc..

Die Beschichtung wird auf ein hitzebeständiges Glas oder Glaskeramiksubstrat aufgebracht. Für Kochflächen werden in der Regel hitzebeständige Glaskeramiksubstrate verwendet. Für andere Einsatzorte mit hoher Temperaturbelastung, also insbesondere mit einer Temperaturbelastung von mehr als 200°C, können aber auch manche hitzebeständigen Spezialgläser verwendet werden.

Das Glas oder Glaskeramiksubstrat ist vorzugsweise eben und im sichtbaren Bereich zumindest teilweise transparent ausgebildet.

Auf das Glaskeramiksubstrat wird zunächst eine Sol-Gel-Schicht aufgebracht, welche zumindest Pigmentpartikel enthält. Insbesondere wird für die Sol-Gel-Schicht ein Hybridpolymer verwendet, so dass nach Trocknung eine teilweise anorganisch, teilweise organisch ausgebildete Schicht entsteht.

Zum Erreichen einer hohen Porosität im nanoskaligen Bereich werden dem Sol-Gel Partikel zugesetzt werden.

Als Partikel können, wie es bei einer bevorzugten Ausführungsform der Erfindung vorgesehen ist, auch weitere Füllstoffe, insbesondere anorganisches, Skelett bildendes Material, zugesetzt werden. Vorzugsweise werden Metall- oder Halbmetalloxydpartikel verwendet.

Die Partikel haben vorzugsweise eine Größe von 0,5 bis 200 nm, besonders bevorzugt von 4 bis 150 nm. Weiter ist auch denkbar, Partikel mit einer mittleren Partikelgröße von 10 bis 50 nm zuzusetzen. Diese können insbesondere auch über die Sol-Gel-Vorstufe erzeugt werden.

Gemäß der Erfindung umfasst das Beschichtungsmaterial Partikel mit einer ketten- und/oder faserförmigen Morphologie.

Unter einer ketten- oder faserförmigen Morphologie werden Partikel verstanden, deren Größe entlang ihrer Haupterstreckungsrichtung mindestens doppelt, vorzugsweise dreimal, so groß ist wie die Größe entlang der geringsten Ausdehung des Partikels, was wiederum im Durchschnitt für die verwendeten Partikel gilt.

Im Fall von Partikel mit einer kettenförmigen Morphologie handelt es sich um Sekundärpartikel, welche aus einer Mehrzahl aneinander gereihter kleinerer Primärpartikel bestehen. Es versteht sich, dass die Partikel zumindest teilweise verzweigt sein können.

Insbesondere können Nanopartikel mit einer durchschnittlichen Länge von 50 bis 150 nm und einer durchschnittlichen Größe von 5 bis 25 nm verwendet. Die Größe kann mittels rasterelektronischer Aufnahmen bestimmt werden, wie im Folgenden noch detailliert beschrieben wird.

Wird die Partikelgröße von bevorzugt verwendeten kettenförmigen Nanopartiklen in einer 0,05 mass-% Dispersion mit der Methode der dynamischen Lichtstreuung (DLS) bestimmt (Gerät: Deltanano HC; Auswertung nach der Methode von Conten) so liegt die Partikelgröße bei ca. 91 nm mit einer sehr breiten Verteilung und einer Standardabweichung von ca. 70 nm. Der Durchmesser der Primärpartikel liegt bei den im REM (Rasterelektronenmikroskop) den vermessen Kettenförmigen Partikeln bei ca. 15 nm.

DLS - Messungen an Dispersionen mit keinen Kettenförmigen Sekundär-Partiklen, bestehend nur aus entsprechend Kugelförmigen Primärpartikeln (Durchmesser von ca. 15 nm im REM) zeigen dagegen einen Durchmesser von 38 nm bei einer Standardabweichung von ca. 14 nm.

Bei einer Ausführungsform sind die Füllpartikel aus nicht Farb-gebendem Material, wie beispielsweise Siliziumoxid, Zirkonoxid oder Aluminiumoxid.

Weiter ist auch denkbar, Polysiloxan-Nanopartikel und Farbgebende nanoskalige Pigmente zuzusetzen.

Im Falle der Verwendung von Farb-gebenden Pigmentpartikeln und nicht Farb-gebenden Gerüst-bildenden Bestandteilen beträgt das Massenverhältnis von Farb-bildenden Bestandteilen zu nicht Farb-gebenden Bestandteilen 0,02 bis 5, bevorzugt 0,3 bis 2, besonders bevorzugt 0,6 bis 1,2. Das Volumenverhältnis von Farb-gebenden Gerüst-bildenden Bestandteilen zu nicht Farb-gebenden Gerüst-bildenden Bestandteilen liegt bei einer Ausführungsform der Erfindung bei 0,01 bis 3,5, bevorzugt bei 0,2 bis 1,5 und besonders bevorzugt bei 0,4 bis 1,0.

Die Dichte des Gerüst-bildenden Materials, insbesondere des aus nanoskaligen Partikeln aufgebauten Gerüst-bildenden Materials, liegt bei einer bevorzugten Ausführungsform der Erfindung zwischen 2,0 und 6 g/cm³, bevorzugt bei 3 bis 4 g/ cm³. Die Skelettdichte kann über He-Pyknometrie bestimmt werden.

Das Skelett-bildende Material, also das Material über das die Porosität bereitgestellt wird, besteht in einer Ausführungsform zumindest teilweise aus Oxiden, welche als Zersetzungsprodukte aus molekulardispersen Sol-Gel-Vorstufen entstanden sind.

Dies können beispielsweise Zersetzungsprodukte von Alkoxysilanen oder Alkoxyzirkonaten sein (GPTES: Glycidyloxypropyltriethoxysilan, TEOS: Tetraethoxysilan, MTEOS: Methyltriethoxysilan, PhTEOS: Phenyltrithoxysilan, MPTES: Methacryloxypropyltriethoxysilan, MPTMS: Methacryloxypropyltrimethoxysilan, VTES: Venyltriethoxysilan, ATES: Allytriethoxysilan, Zirkontetrapropylat, Titantetraethylat, Aluminiumsecundärbutylat).

Bevorzugt werden als Skelett-bildendes Matrixmaterial kristalline und/oder glasige anorganische Materialien verwendet.

Die Sol-Gel-Schicht wird vorzugsweise mittels Siebdruck aufgebracht.
Auf die Sol-Gel-Schicht, welche zunächst getrocknet bzw. eingebrannt wird, um ein Skelett auszubilden, wird eine Polymerschicht aufgebracht, wobei die Sol-Gel-Schicht durch das Material der Polymerschicht infiltriert wird. Überraschenderweise hat sich gezeigt, das auch eine Sol-Gel-Schicht mit einem mittleren Porendurchmesser von unter 100 nm, welche insbesondere bei Porositätsmessungen durch Stickstoffadsorption als dichte Schicht scheint, durch ein Polymermaterial durchsetzt wird, dass eine dichte Kompositschicht entsteht.
Die Polymerschicht hat vorzugsweise eine Hitzebeständigkeit bei 1 Stunde Belastungsdauer von über 200 °C, bevorzugt über 300 °C, ganz besonders bevorzugt über 400 °C. Polysiloxane, insbesondere Silkonfarben wie beispielsweise Methyl- oder Phenylsilikon-Harze werden verwendet. Denkbar ist aber auch, für die Polymerschicht ein anderes Sol-Gel-Material zu verwenden.
Die Erfinder haben herausgefunden, dass sich über eine Kombination einer teilweise anorganisch ausgebildeten Schicht, welche mit einem Polymermaterial verfüllt wird, ein homogener dichter Schichtverbund bereitstellen lässt, der hochglänzend ausgebildet sein kann und weit weniger als bekannte Sol-Gel-Schichten zu Rissbildungen bei Temperaturbeanspruchung neigt.

Vielmehr ist der Farbort vor und nach thermischer Belastung hochglänzend, insbesondere mit einem Glanzgrad von G1 nach EN ISO 2813.

Aufgrund der Dichte neigt der Schichtverbund auch beim Kontakt mit Schmutzstoffen oder deren Zersetzungsprodukten nicht zu lokalen Verfärbungen.

Vorzugsweise werden schwarze Schichten, insbesondere mit einem Wert L im Lab-Farbraum von weniger als 28,0 bereitgestellt, besonders bevorzugt von weniger als 27,5 und ganz besonders bevorzugt von weniger als 27,0.

Die Skelettdichte der pigmentierten Polymerschicht im erfindungsgemäß hergestellten homogenen Kompositmaterial beträgt bei einer bevorzugten Ausführungsform 1,3 bis 5 g/cm³, bevorzugt 1,5 bis 4,0 g/cm³ und besonders bevorzugt 1,8 bis 3,0 g/cm³.

Das Material der Polymerschicht durchdringt das Skelett-bildende Material der Sol-Gel-Schicht nahezu homogen und auf nanoskaliger Dimension.

Die Skelettdichte des durchdringenden polymeren Materials liegt Kompositmaterial bei einer bevorzugten Ausführungsform bei 1,0 bis 2,5 g/cm³, bevorzugt bei 1,3 bis 2,2 g/cm³ und besonders bevorzugt bei 1,5 bis 1,9 g/cm³.

Als Polymermaterial werden insbesondere auch fluorierte Polymere und/oder Polysiloxane oder Sol-Gel-abgeleitete Hybridpolymere verwendet. Insbesondere können Methyl- oder Phenyl-substituierte Sol-Gel-Materialien oder Polysiloxane verwendet werden. In einer besonderen Ausführungsform wird ein Hochtemperatur-beständiges Methylphenylpolysiloxanharz und ein Siliziumoxid-haltiges Methylsiloxanharz verwendet. Denkbar sind aber auch Epoxid und/oder Polyester und/oder Methacrylat und/oder Phenyl-substituierte Siloxane.

Das Volumenverhältnis des Materials der ersten Schicht zum Material der Polymerschicht beträgt dem hergestellten Verbundmaterial bei einer bevorzugten Ausführungsform der Erfindung 10 bis 0,5, bevorzugt 4 bis 1, besonders bevorzugt 3 bis 1,5.

Bei einer weiteren Ausführungsform der Erfindung wird auch das Material der Polymerschicht mit Füllstoffen und/oder Pigmenten versetzt. Vorzugsweise haben Füllstoffe und/oder Pigmente eine mittlere Partikelgröße von 100 nm bis 2 µm. Reine Füllstoffe können Partikelgrößen zwischen 1 nm und 300 µm annehmen.

Als Füllstoffe können insbesondere Silica-Partikel, Alumina-Partikel, pyrogene Kieselsäuren, Kalk-Natron-, Alkali-Alumosilicat- und/oder Borosilicatglaskugeln und/oder Glashohlkugeln verwendet werden.

Als Pigmente können insbesondere verwendet werden: plättchen- oder stäbchenförmige Pigmente, beschichtete Effektpigmente und Absorptionspigmente (Cobalt-Oxide/- Spinelle, Cobalt-Aluminium-Spinelle, Cobalt-Titan-Spinelle, Cobalt-Chorm-Spinelle, Cobalt-Nickel-Mangan-Eisen-Chrom-Oxide / -Spinelle, Cobalt-Nickel-Zink-Titan-Aluminium-Oxide / -Spinelle, Eisen-Oxide, Eisen-Chrom-Oxide, Eisen-Chrom-Zink-Titan-Oxid, Kupfer-Chrom-Spinelle, Nickel-Chrom-Antimon-Titan-Oxide, Titan-Oxide, Zirkon-Silizium-Eisen-Oxide / -Spinelle etc.).

Insbesondere die Verwendung von plättchenförmigen Pigmenten im Material der Polymerschicht kann dazu führen, dass Partikel und Füllstoffe des Materials der porösen Schicht zumindest teilweise abgedeckt werden.

Die poröse Schicht nach einer thermischen Behandlung von 400 °C hat bei einer bevorzugten Ausführungsform der Erfindung eine offene Porosität von über 10 %, vorzugsweise von über 20 %, besonders bevorzugt von über 25 %. Das Schichtgefüge der nicht infiltrierten Schicht weist nach thermischer Behandlung bei 400 °C sowohl Mikro als auch Mesoporen auf mit einem mittleren Porendurchmesser von 1 - 6 nm auf.

Der mittlere Porendurchmesser wird dabei aus den Adsorptionskurven nach der BJH-methode aus der N2-Sorption ermittelt.

Die offene Porosität wird dabei an abgekratzten Schichten welche nicht infiltriert worden sind aber mit identischen Parametern prozessiert worden sind, mittels der Methode der N2-Sorption und der He-Pyknometrie bestimmt. Aus dem Porenvolumen (N2-Sorption) und der Skelettdichte (He-Pyknometrie) wird anschließend die offene Porosität errechnet.

Das erfindungsgemäß hergestellte Verbundmaterial, welches eine Kompositschicht umfasst, die ein überwiegend anorganisches Gerüst mit Pigmentpartikeln umfasst, das seinerseits nanoskalige Poren umfasst, die mit einem Polymer aufgefüllt sind, hat vorzugsweise eine geschlossene Porosität von weniger als 20 Vol-%, besonders bevorzugt von weniger als 5 Vol- %.

Die offene Porosität wird dabei an abgekratzten Komposit-Schichten mittels der Methode der N₂-Sorption und der He-Pyknometrie bestimmt. Aus dem Porenvolumen und der Skelettdichte wird anschließend die offene Porosität errechnet.

Als offene Porosität wird die Porosität bezeichnet, welche man aus den Porenvolumen errechnet, die über N₂-Sorption messbar sind.

In einer weiteren Ausführungsform der Erfindung wird die hergestellte Kompositschicht von weiteren Schichten überdeckt. Insbesondere können pigmentierte Sol-Gel-Schichten oder Polysiloxanschichten verwendet werden.

Neben der bevorzugten Verwendung als Unterseitenbeschichtung für eine Glaskeramikkochfläche eignet sich die Erfindung auch zur Glasscheibenbedruckung, beispielsweise für Backofenscheiben und Kaminsichtscheiben.

### Beschreibung der Zeichnungen

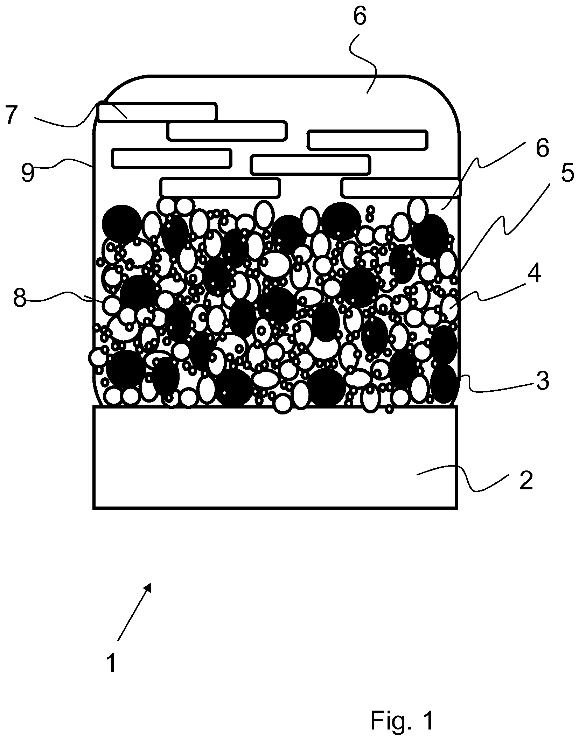

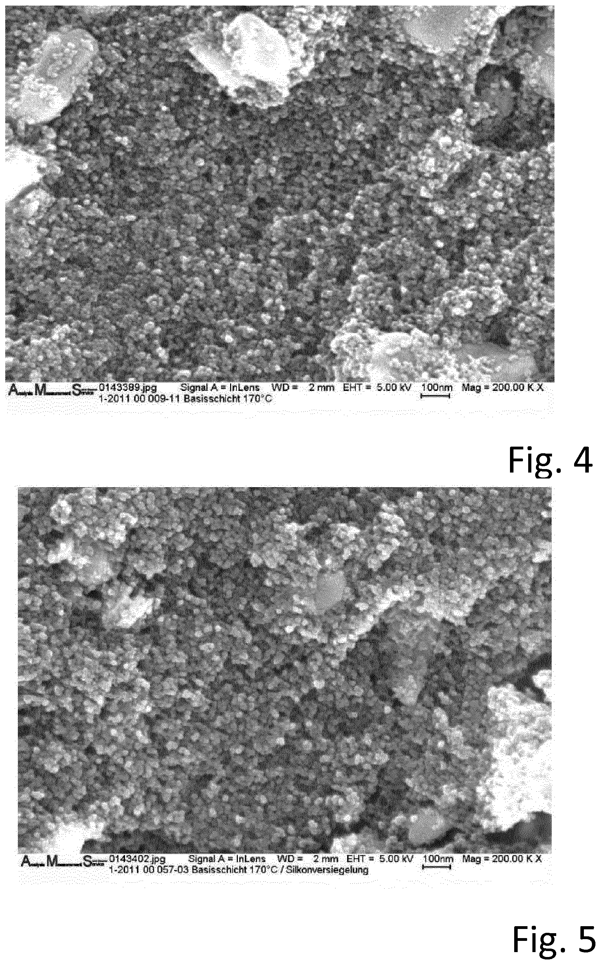

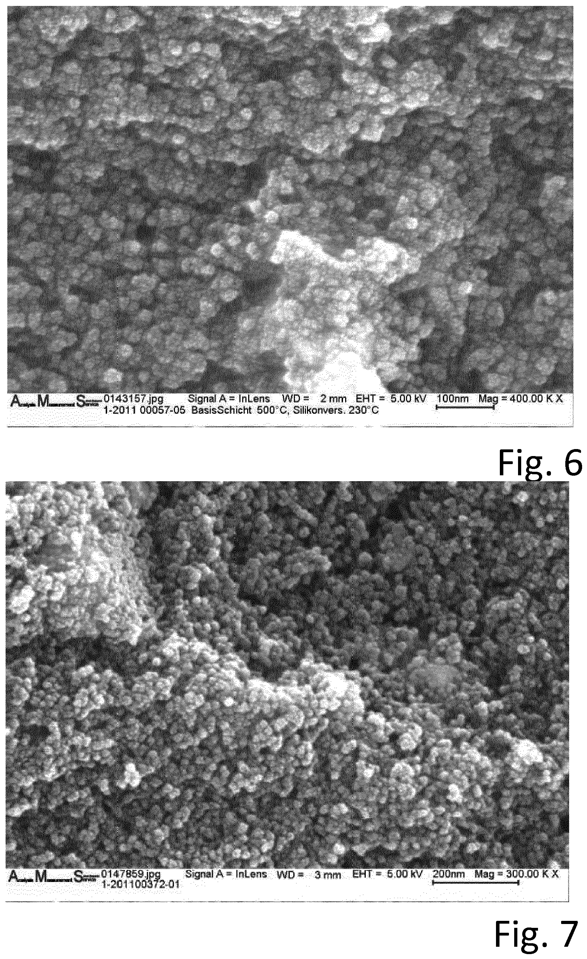

Die Erfindung soll im Folgenden Bezug nehmend auf die Zeichnungen Fig. 1 bis Fig. 6 anhand schematisch dargestellter Ausführungsbeispiele näher erläutert werden.

Fig. 1 zeigt ein zur Illustration schematisch dargestelltes Verbundmaterial 1 mit einer erfindungsgemäß aufgebrachten Kompositschicht. Auf ein Glaskeramiksubstrat 2 ist eine Kompositschicht aufgebracht, die aus einer porösen Schicht besteht, welche mit einer Polymerschicht aufgefüllt wurde.

Die Kompositschicht umfasst färbenden Pigmentpartikel 3. Die Pigmentpartikel 3 dienen gleichzeitig der Ausbildung eines porösen Skeletts. Beispielsweise kann ein ManganFerrit-Spinell mit einer mittleren Partikelgröße von weniger als 100 nm verwendet werden.

Weiter umfasst das Material der zunächst als Sol-Gel-Schicht aufgebrachten ersten Schicht nicht färbende Füllstoffpartikel, in diesem Ausführungsbeispiel Füllpartikel 4 mit einem mittleren Durchmesser zwischen 15 und 150 nm. Weitere Partikel 5 sind ebenfalls nicht färbende Skelettpartikel aus einer molekularen Sol-Gel-Vorstufe, beispielsweise Siliziumoxid mit granularer Struktur mit einer mittleren Partikelgröße von unter 5 nm aus pyrolisierten und vorher hydrolisierten Hybridpolymeren (beispielsweise GPTES, TEOS).

Die Partikel 3, 4, 5 der zuerst aufgebrachten Schicht sind mit einem Polymermaterial 6, in diesem Ausführungsbeispiel mit einem Hochtemperatur-beständigen Polysiloxan aufgefüllt, so dass ein dichtes Kompositmaterial 8 entstanden ist.

In dem hier dargestellten Ausführungsbeispiel wurde das Polymermaterial 6 in einer derart großen Menge aufgebracht, dass über dem Kompositmaterial 8 eine Versiegelungsschicht 9 entstanden ist, die keine Füllstoff-Partikel 4, 5 und Pigmentpartikel 3 des Materials der ersten porösen Schicht enthält.

Vielmehr wurde das Polymermaterial 6 mit größeren plättchenförmigen Pigmenten versetzt, welche sich als zusätzliche Schicht über die Partikel der ersten Schicht legen. Es ist mithin eine Versiegelungsschicht 9 entstanden.

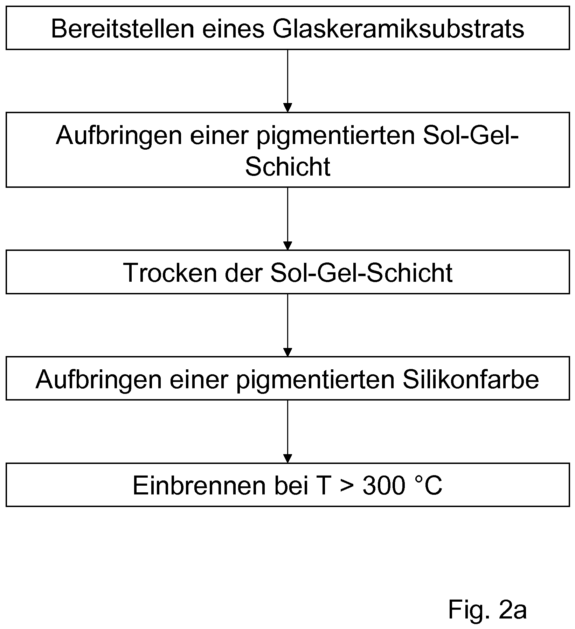

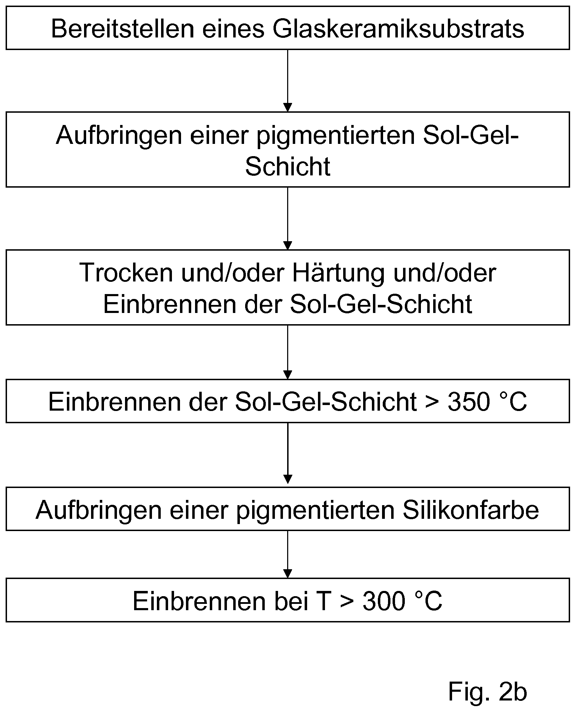

Fig. 2a und Fig. 2b zeigen anhand eines Flussbildes die wesentlichen Verfahrensschritte eines Ausführungsbeispiels der Erfindung.

Zunächst wird ein Glaskeramiksubstrat bereitgestellt.

Sodann wird eine pigmentierte Sol-Gel-Schicht aufgebracht.

Die Sol-Gel-Schicht wird getrocknet bzw. gehärtet und wahlweise (Fig. 2b) bei einer Temperatur über 350 °C eingebrannt, dabei entsteht ein durch die Silikonfarbe infiltrierbares teilweise nanoskalig-poröses, teilweise anorganisch ausgebildetes Gerüst.

Sodann wird eine pigmentierte Silikonfarbe aufgebracht und der so entstandene Schichtverbund, bei dem die Silikonfarbe die nanoskaligen Poren der Sol-Gel-Schicht auffüllt, wird bei einer Temperatur von über 300°C eingebrannt. Es versteht sich, dass dabei auch organische Bestandteile, insbesondere der Sol-Gel-Schicht entfernt werden können. Die verwendete Silikonfarbe sollte aber eine Temperaturstabilität zum Einbrennen des Schichtverbundes aufweisen.

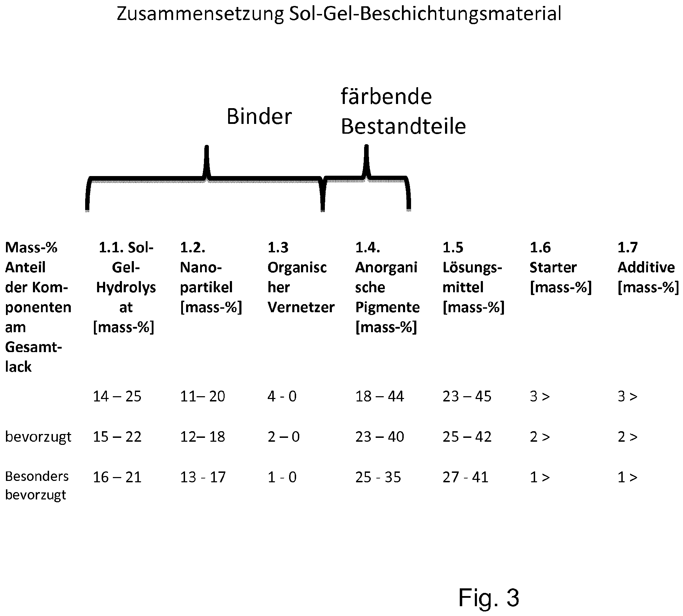

Fig. 3 zeigt eine Tabelle mit einer Zusammensetzung des verwendeten Sol-Gel-Beschichtungsmaterials in einer einfachen sowie in bevorzugten und besonders bevorzugten Ausführungsvarianten.

Der Hybridpolymerlack weist zum Einen Binderkomponenten auf, welche ein Sol-Gel-Hydrolysat, Nanopartikel umfassen.

Als färbende Bestandteile werden anorganische Pigmente zugesetzt.

Weiter umfasst der Hybridpolymerlack ein hoch siedendes Lösungsmittel.

Optional können Starter, organische Vernetzer und Additive in der genannten Menge zugesetzt werden.

Fig. 4 zeigt eine rasterelektronenmikroskopische Aufnahme eines Ausführungsbeispiels einer getrockneten Hybridpolymerschicht, welche als erste Schicht aufgetragen, aber noch nicht von einem Polymer infiltriert wurde.

Insbesondere aufgrund zugesetzter nanoskaliger Partikel ist eine infiltrierbare Schicht entstanden.

Fig. 5 zeigt diese Schicht nach dem Aufbringen eines Polysiloxans. Die Struktur der ersten Schicht ist weiterhin gut zu erkennen. Die erste Schicht wurde vom Polysiloxan infiltriert, eine dichte Kompositschicht ist entstanden.

Fig. 6 zeigt die in Fig. 5 gezeigte Kompositschicht nach einer Temperaturbelastung von über 500 °C. Die in Fig. 5 zu erkennen Struktur ist weitgehend erhalten geblieben. Die Schicht ist mithin temperaturstabil bis über 500 °C.

Fig. 7 zeigt die in Fig. 4 dargestellte Schicht ohne Silikoninfiltrierung nach einer thermischen Behandlung nach 400 °C. Es ist eine poröse Schicht ohne infiltriertes Silikonharz entstanden.

Im Konkreten kann ein erfindungsgemäßes Verbundmaterial wie folgt hergestellt werden:

### Beispiel 1:

Es werden zunächst 4 mol MPTES (Methacryloxypropyltriethoxysilan) mit 1 mol TEOS und 2,3g H₂O, in welchem 0,344 g Paratoluolsulfonsäure gelöst sind, hydrolisiert. Von dem Gemisch wird anschließend am Rotationsverdampfer das Lösungsmittel entfernt und das sog. Hydrolysat erhalten.

18 g des Hydrolysates werden anschließend mit 55 g einer 35 Mass-%igen Lösung von kettenförmigen SiO₂-Nanopartikeln in Diethylenglycolmonoethylether versetzt. Zu dieser Lösung werden anschließend 30 g eines nanoskaligen (< 100 nm) Schwarzpigmentes (Manganferrit-Spinell) gegeben..

Die Farbe wird mittels einer Dissolverscheibe homogen verrührt.

Die Farbe wird dann mittels eines 140er Siebes auf eine transparente Glaskeramik aufgedruckt und anschließend bei 170°C für 1 Stunde getrocknet. Die später ein nanoskaliges Gerüst ausbildende Komponente ist damit nun aufgebracht.

Dann wird auf die erste Schicht eine zweite Schicht mit der infiltrierenden Komponente ebenfalls über Siebdruck aufgebracht. Hierfür wird eine Silikonfarbe auf Basis eines Methyl/Phenylsilikonharzes gelöst in Xylol
verwendet.(REN 80 von Wacker). Der Silikonfarbe sind dabei 22 Mass-% von glimmerförmigen Pigmenten mit einer mittleren Partikelgröße von 15 µm zugeben. Für den Siebdruck der infiltrierenden Komponente wird ein 77er Sieb verwendet.

Anschließend wird das gesamte Schichtpaket bei 380°C für 1 Stunde eingebrannt.

Es wird dabei ein Glaskeramiksubstrat mit einer dichten homogenen Kompositschicht, überdeckt von einer pigmentierten Silikonschicht, hergestellt.

### Beispiel 2:

Es werden zunächst 4 mol GPTES (Glycidoxypropyltriethoxysilan) mit 1 mol TEOS und 2,3 g H₂O, in welchem 0,344 g Paratoluolsulfonsäure gelöst sind, hydrolisiert. Von dem Gemisch wird anschließend am Rotationsverdampfer das Lösungsmittel entfernt und das sog. Hydrolysat erhalten.

18 g des Hydrolysates werden anschließend mit 55 g einer 35 Mass-%igen Lösung von kettenförmigen SiO₂-Nanopartikeln in Diethylenglycolmonoethylether versetzt. Zu dieser Lösung werden anschließend 30 g eines nanoskaligen (< 100 nm) Schwarzpigmentes (Manganferrit-Spinell) gegeben.

Die Farbe wird mittels einer Dissolverscheibe homogen verrührt.

Die Farbe wird dann mittels eines 140er Siebes auf eine transparente Glaskeramik aufgedruckt und anschließend bei 170°C für 1 Stunde getrocknet und die Schicht bei 400 °C eingebrannt. Die später das nanoskalige Gerüst ausbildende Komponente ist damit aufgebracht.

Dann wird auf die erste Schicht eine zweite Schicht mit der infiltrierenden Komponente ebenfalls über Siebdruck aufgebracht. Hierfür wird eine Silikonfarbe auf Basis eines Methyl/Phenylsilikonharzes, gelöst in Xylol, verwendet (DC 805 von Dow Corning). Der Silikonfarbe sind dabei 30 Mass-% von glimmerförmigen Pigmenten mit einer mittleren Partikelgröße von 15 µm zugeben. Für den Siebdruck der infiltrierenden Komponente wird ein 77er Sieb verwendet.

Anschließend wird das gesamte Schichtpaket bei 420°C für 1 Stunde eingebrannt.

Es wird dabei ein Glaskeramiksubstrat mit einer dichten homogenen Kompositschicht, überdeckt von einer pigmentierten Silikonschicht, erhalten.

Durch die Erfindung konnte ein Verfahren bereitgestellt werden, mit dem sich auf sehr einfache Weise hitzebeständige dekorative Beschichtungen mit nahezu beliebigen Farbort auf einem Glaskeramiksubstrat aufbringen lassen.

## Patentansprüche

1. Verfahren zum Herstellen eines Verbundmaterials mit dekorativer Beschichtung, umfassend die Schritte:
- Bereitstellen eines Glas- oder Glaskeramiksubstrats,
- Aufbringen einer Sol-Gel-Schicht, welcher zumindest Pigmentpartikel und Oxidpartikel- zugesetzt werden,
- Aufbringen einer Polymerschicht auf die Sol-Gel-Schicht, wobei Sol-Gel-Schicht durch das Material der Polymerschicht infiltriert wird, wobei als Material für die Polymerschicht ein Polysiloxan verwendet wird,
- wobei dem Material der Polymerschicht Pigmente zugesetzt werden,
**dadurch gekennzeichnet, dass** dem Sol-Gel Oxidpartikel mit faser- und/oder kettenförmiger Morphologie zugesetzt werden.

2. Verfahren zum Herstellen eines Verbundmaterials mit dekorativer Beschichtung nach dem vorstehenden Anspruch, **dadurch gekennzeichnet, dass** als Oxidpartikel Nanopartikel verwendet werden, insbesondere SiO₂-Nanopartikel.

3. Verfahren zum Herstellen eines Verbundmaterials mit dekorativer Beschichtung nach einem der vorstehenden Ansprüche, **dadurch gekennzeichnet, dass** eine Sol-Gel-Schicht mit einem mittleren Porendurchmesser von weniger als 10 nm, bevorzugt weniger als 5 nm aufgebracht wird, und/oder dass die Sol-Gel-Schicht einen mittleren Porendurchmesser zwischen 0,5 und 500 nm, bevorzugt zwischen 1 und 200 nm, besonders bevorzugt zwischen 5 und 100 nm aufweist.

4. Verfahren zum Herstellen eines Verbundmaterials mit dekorativer Beschichtung nach einem der vorstehenden Ansprüche, **dadurch gekennzeichnet, dass** die Polymerschicht vor einem Einbrand der Sol-Gel-Schicht aufgebracht wird.

5. Verfahren zum Herstellen eines Verbundmaterials mit dekorativer Beschichtung nach einem der vorstehenden Ansprüche, **dadurch gekennzeichnet, dass** als Material für die Polymerschicht ein Methyl- oder Phenyl-Silikonharz wird.

6. Verfahren zum Herstellen eines Verbundmaterials mit dekorativer Beschichtung nach einem der vorstehenden Ansprüche, **dadurch gekennzeichnet, dass** dem Material der Polymerschicht plättchenförmige Pigmente zugesetzt werden.

7. Verfahren zum Herstellen eines Verbundmaterials mit dekorativer Beschichtung nach einem der vorstehenden Ansprüche, **dadurch gekennzeichnet, dass** die poröse Schicht und/oder die Polymerschicht mittels Siebdruck aufgebracht werden.

8. Verfahren zum Herstellen eines Verbundmaterials mit dekorativer Beschichtung nach einem der vorstehenden Ansprüche, **dadurch gekennzeichnet, dass** der aus Polymerschicht und die Sol-Gel-Schicht entstandene Verbund thermisch gehärtet wird, insbesondere bei einer Temperatur von über 200 °C.

9. Verbundmaterial, hergestellt mit einem Verfahren nach einem der vorstehenden Ansprüche, umfassend ein Glaskeramiksubstrat, wobei auf dem Glaskeramiksubstrat eine Kompositschicht angeordnet ist, die ein überwiegend anorganisches Gerüst mit Pigmentpartikeln sowie Oxidpartikeln mit faser- und/oder kettenförmiger Morphologie umfasst, welches nanoskalige Poren umfasst, die mit einem Polysiloxan aufgefüllt sind.

10. Verbundmaterial nach einem der vorstehenden
Ansprüche, **dadurch gekennzeichnet, dass** die Kompositschicht eine geschlossene Porosität von weniger als 20 %, vorzugsweise von weniger als 5 % aufweist.

11. Verbundmaterial nach einem der vorstehenden
Ansprüche, **dadurch gekennzeichnet, dass** die Beschichtung glänzt, insbesondere mit einem Glanzgrad von G1 nach EN ISO 2813.

12. Verwendung eines Verbundmaterials nach einem der
vorstehenden Ansprüche als Teil eines Kochfeldes, als Kaminsichtscheibe oder Teil einer Backofentür.

## Claims

1. A method for producing a composite material with a decorative coating, comprising the steps of:
- providing a glass or glass ceramic substrate;
- applying a layer of a sol-gel material that includes at least added pigment particles and oxide particles;
- applying a polymer layer on the sol-gel layer, wherein the sol-gel layer is infiltrated by the material of the polymer layer, wherein a polysiloxane is used as a material for the polymer layer;
- wherein pigments are added to the material of the polymer layer;
**characterised in that**
oxide particles of fibrous and/or chain-like morphology are added to the sol-gel.

2. The method for producing a composite material with a decorative coating according to the preceding claim, **characterised in that** nanoparticles are used as the oxide particles, in particular SiO₂ nanoparticles.

3. The method for producing a composite material with a decorative coating according to any one of the preceding claims, **characterised in that** a sol-gel layer is applied, which has a mean pore diameter of less than 10 nm, preferably less than 5 nm; and/or that the sol-gel layer has a mean pore diameter between 0.5 and 500 nm, preferably between 1 and 200 nm, more preferably between 5 and 100 nm.

4. The method for producing a composite material with a decorative coating according to any one of the preceding claims, **characterised in that** the polymer layer is applied prior to firing the sol-gel layer.

5. The method for producing a composite material with a decorative coating according to any one of the preceding claims, **characterised in that** a methyl or phenyl silicone resin is used as a material for the polymer layer.

6. The method for producing a composite material with a decorative coating according to any one of the preceding claims, **characterised in that** platelet-shaped pigments are added to the material of the polymer layer.

7. The method for producing a composite material with a decorative coating according to any one of the preceding claims, **characterised in that** the porous layer and/or the polymer layer are applied by screen printing.

8. The method for producing a composite material with a decorative coating according to any one of the preceding claims, **characterised in that** the composite resulting from the polymer layer and the sol-gel layer is thermally cured, in particular at a temperature of more than 200 °C.

9. A composite material, produced by a method according to any one of the preceding claims, comprising a glass ceramic substrate with a composite layer disposed on said glass ceramic substrate, which composite layer comprises a predominantly inorganic skeleton with pigment particles and oxide particles of fibrous and/or chain-like morphology, which has nanoscale pores that are filled with a polysiloxane.

10. The composite material according to any one of the preceding claims, **characterised in that** the composite layer exhibits a closed porosity of less than 20 %, preferably less than 5 %.

11. The composite material according to any one of the preceding claims, **characterised in that** the coating is glossy, in particular with a degree of gloss of G1 according to EN ISO 2813 standard.

12. Use of a composite material according to any one of the preceding claims as part of a cooktop, as a fireplace window, or as part of an oven door.

## Revendications

1. Procédé de fabrication d'un matériau composite pourvu d'un revêtement décoratif, comprenant les étapes de :
- mise à disposition d'un substrat en verre ou en vitrocéramique,
- dépôt d'une couche sol-gel, à laquelle sont ajoutées au moins des particules de pigment et des particules d'oxyde,
- dépôt d'une couche de polymère sur la couche sol-gel, la couche sol-gel étant infiltrée par la matière de la couche de polymère, un polysiloxane étant utilisé comme matière pour la couche de polymère,
- des pigments étant ajoutés à la matière de la couche de polymère,
**caractérisé en ce que** des particules d'oxyde ayant une morphologie de type fibre et/ou chaîne sont ajoutées au sol-gel.

2. Procédé de fabrication d'un matériau composite pourvu d'un revêtement décoratif selon la revendication précédente, **caractérisé en ce que** des nanoparticules, en particulier des nanoparticules de SiO₂, sont utilisées comme particules d'oxyde.

3. Procédé de fabrication d'un matériau composite pourvu d'un revêtement décoratif selon l'une des revendications précédentes, **caractérisé en ce qu'**une couche sol-gel ayant un diamètre moyen de pores inférieur à 10 nm, de préférence inférieur à 5 nm, est déposée, et/ou **en ce que** la couche sol-gel présente un diamètre moyen de pores compris entre 0,5 et 500 nm, de préférence entre 1 et 200 nm, de manière particulièrement préférée entre 5 et 100 nm.

4. Procédé de fabrication d'un matériau composite pourvu d'un revêtement décoratif selon l'une des revendications précédentes, **caractérisé en ce que** la couche de polymère est déposée avant une pénétration de la couche sol-gel.

5. Procédé de fabrication d'un matériau composite pourvu d'un revêtement décoratif selon l'une des revendications précédentes, **caractérisé en ce qu'**une résine de silicone méthylique ou phénylique est déposée comme matière pour la couche de polymère.

6. Procédé de fabrication d'un matériau composite pourvu d'un revêtement décoratif selon l'une des revendications précédentes, **caractérisé en ce que** des pigments lamellaires sont ajoutés à la matière de la couche de polymère.

7. Procédé de fabrication d'un matériau composite pourvu d'un revêtement décoratif selon l'une des revendications précédentes, **caractérisé en ce que** la couche poreuse et/ou la couche de polymère sont déposées par sérigraphie.

8. Procédé de fabrication d'un matériau composite pourvu d'un revêtement décoratif selon l'une des revendications précédentes, **caractérisé en ce que** le composite résultant de la couche de polymère et de la couche sol-gel est durci thermiquement, notamment à une température supérieure à 200°C.

9. Matériau composite, fabriqué par un procédé selon l'une des revendications précédentes, comprenant un substrat en vitrocéramique, où une couche composite comprenant un squelette principalement inorganique, pourvu de particules de pigment et de particules d'oxyde ayant une morphologie de type fibre et/ou chaîne et présentant des pores nanométriques remplis d'un polysiloxane, est disposée sur le substrat en vitrocéramique.

10. Matériau composite selon l'une des revendications précédentes, **caractérisé en ce que** la couche de composite présente une porosité fermée inférieure à 20 %, de préférence inférieure à 5 %.

11. Matériau composite selon l'une des revendications précédentes, **caractérisé en ce que** le revêtement brille, notamment à un degré de brillance G1 d'après la norme EN ISO 2813.

12. Utilisation d'un matériau composite selon l'une des revendications précédentes en tant que partie d'un plan de cuisson, en tant que vitre d'insert de foyer ou partie d'une porte de four de cuisson.
